# EUROPEAN PATENT SPECIFICATION

(11) **EP 1 528 238 B1**
(45) Date of publication and mention of the grant of the patent: **19.10.2016**
(21) Application number: 04025838.6
(22) Date of filing: 29.10.2004
(51) Int. Cl.: F02C 7/12

(54) **Gas turbine plant and method of cooling gas turbine plant**
Gasturbinenanlage und Verfahren zur Kühlung einer Gasturbinenanlage
Installation de turbine à gaz et procédé de refroidissement d'une telle installation

(30) Priority: 31.10.2003 JP 2003371424
(43) Date of publication of application: 04.05.2005
(73) Proprietor: Mitsubishi Hitachi Power Systems, Ltd., Yokohama 220-8401 (JP)
(72) Inventor: Higuchi, Shinichi, Chiyoda-ku, Tokyo 100-8220 (JP); Marushima, Shinya, Chiyoda-ku, Tokyo 100-8220 (JP); Hatamiya, Shigeo, Chiyoda-ku, Tokyo 100-8220 (JP)
(74) Representative: MERH-IP Matias Erny Reichl Hoffmann Patentanwälte PartG mbB

(56) References cited:
- EP-A- 0 684 369
- EP-A- 0 978 635
- DE-A1- 19 716 721
- GB-A- 2 236 145
- JP-A- 11 257 006
- US-A- 3 302 397
- US-A- 5 160 096
- US-A1- 2003 051 481

## Description

### BACKGROUND OF THE INVENTION

### 1. Field of the Invention

The present invention relates to a gas turbine plant and a method of cooling a gas turbine plant.

### 2. Description of the Related Art

Patent Reference 1 (JP,A 11-257006) discloses a turbine blade cooling system used in a gas turbine in which the turbine is driven by high-temperature exhaust gas produced by mixing and burning high-moisture air and fuel. While Patent Reference 1 primarily discloses a method of producing a coolant used for cooling turbine blades, it includes no suggestions about practical coolant channels leading to turbine parts to be cooled, i.e., stator blades and rotor blades.

### SUMMARY OF THE INVENTION

The technique disclosed in Patent Reference 1 employs one mixer to produce all of the coolant used for cooling the turbine blades. It has therefore been difficult to make the moisture content of the coolant different for each of various turbine areas.

It is an object of the present invention to provide a gas turbine plant and a method of cooling a gas turbine plant, which can suppress condensation of moisture and can ensure high reliability.

The object is achieved by the invention according to the independent claims. The dependent claims describe further preferred developments of the invention. The present invention is featured by including coolant channels for introducing humid air to inlets of cooling channels formed in stator blades, and by suppressing condensation of moisture in a coolant in at least two of the coolant channels.

According to the present invention, it is possible to provide the gas turbine plant and the method of cooling the gas turbine plant, which can suppress condensation of moisture and can ensure high reliability.

### BRIEF DESCRIPTION OF THE DRAWINGS

Fig. 1 is a schematic partial sectional view showing a first embodiment of a gas turbine plant;
Fig. 2 is a schematic circuit diagram showing the first embodiment of the gas turbine plant;
Fig. 3 is a schematic partial sectional view showing a second embodiment of the gas turbine plant;
Fig. 4 is a schematic partial sectional view showing a third embodiment of the gas turbine plant;
Fig. 5 is a schematic partial sectional view showing a fourth embodiment of the gas turbine plant;
Fig. 6 is a schematic partial sectional view showing a fifth embodiment of the gas turbine plant;
Fig. 7 is a schematic partial sectional view showing a sixth embodiment of the gas turbine plant; and
Fig. 8 is a schematic circuit diagram showing the sixth embodiment of the gas turbine plant.

### DESCRIPTION OF THE PREFERRED EMBODIMENTS

Embodiments of the present invention will be described below with reference to the drawings.

### [First Embodiment]

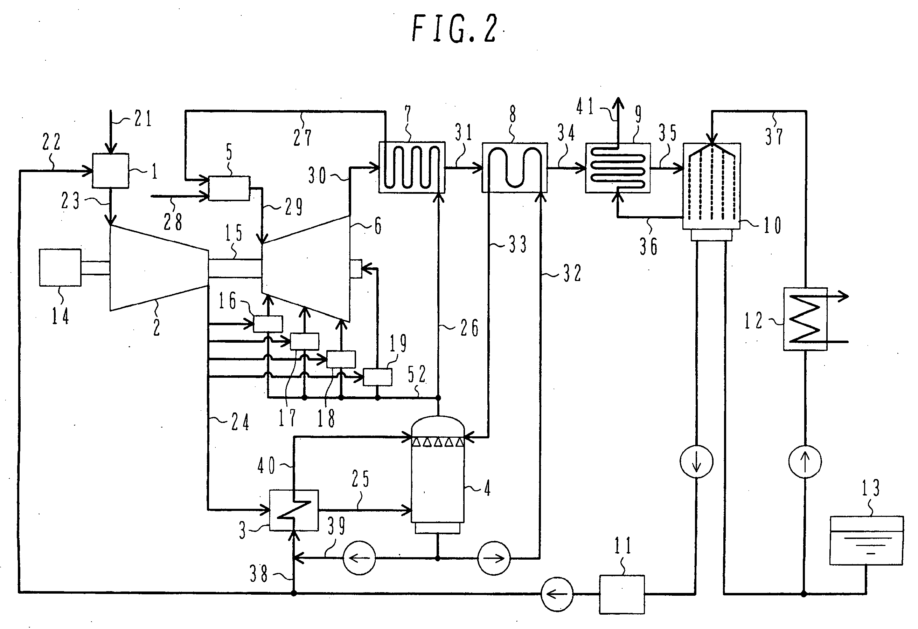

Fig. 2 is a schematic circuit diagram of a gas turbine plant according to a first embodiment. The construction of the gas turbine plant will be described below with reference to Fig. 2.

A description is first made of a gas flow inside the gas turbine plant according to this embodiment from a point at which an atmosphere 21 sucked by a compressor 2 becomes humid air to a point at which the sucked atmosphere is finally discharged as exhaust gas 41 to the exterior. A mixer 1 sprays water 22 into the atmosphere 21 to produce humid air 23. The humid air 23 produced by the mixer 1 is compressed by the compressor 2, and the compressed air produced by the compressor 2 is extracted through a bleed hole formed midway a gas path. In this embodiment, the bleed hole in the gas path of the compressor 2 is disposed on the higher-pressure side where the pressure of the compressed air is relatively high. High-pressure air 24 extracted from the compressor 2 is supplied to an air cooler 3 in which the high-pressure air 24 is cooled by using recovered water 38 from a water recovery unit 10 and recovered water 39 from a humidifier 4. The high-pressure air 24 is also supplied to first to third coolant mixers 16, 17 and 18 disposed in respective coolant channels for cooling stator blades of a turbine 6, and to a fourth coolant mixer 19 disposed in a coolant channel for cooling rotor blades of the turbine 6. High-pressure air 25 cooled by the air cooler 3 is humidified by the humidifier 4 using water 40 heated through the air cooler 3 and water 33 heated through an economizer 8. Humid air 26 humidified by the humidifier 4 is supplied to a recuperator 7 for overheating by exhaust gas 30 from the turbine 6, and also supplied to each of the first coolant mixer 16, the second coolant mixer 17, the third coolant mixer 18 and the fourth coolant mixer 19 disposed in the respective coolant channels for cooling the corresponding components of the turbine 6. Then, the recuperator 7 overheats the humid air 26 supplied from the humidifier 4 to produce humid air 27 that is supplied to a combustor 5. On the other hand, each of the first coolant mixer 16, the second coolant mixer 17, the third coolant mixer 18 and the fourth coolant mixer 19 mixes a part of the humid air 26 supplied from the humidifier 4 with the high-pressure air 24 extracted from the compressor 2, thereby producing a coolant optimum for intended cooling. The humid air 27 supplied to the combustor 5 is mixed with fuel 28 and burnt in the combustor 5. Further, combustion gas 29 generated in the combustor 5 is supplied to the turbine 6 for rotation of the turbine 6. The exhaust gas 30 discharged from the turbine 6 is subjected to heat recovery in the recuperator 7 and then supplied as exhaust gas 31 to the economizer 8. The economizer 8 supplies, to an exhaust gas reheater 9, exhaust gas 34 obtained by recovering heat from the exhaust gas 31 therein. Exhaust gas 35 discharged from the exhaust gas reheater 9 is supplied to the water recovery unit 10 for cooling the exhaust gas 35 by cooling water 37 to condense moisture so that water is recovered. Then, exhaust gas 36 discharged from the water recovery unit 10 is returned to the exhaust gas reheater 9, whereby the exhaust gas 41 discharged to the exterior can be prevented from generating white smoke. In addition, the compressor 2 and the turbine 6 are coupled to each other through an intermediate shaft 15, and a generator 14 for converting shaft motive power generated from the turbine 6 into electric power is also coupled to a rotary shaft of the compressor 2.

Next, a water circulation system will be described. In order to supply water to the water recovery unit 10 for cooling the exhaust gas 35 and recovering water, the gas turbine plant of this embodiment is equipped with a water tank 13 from which water is replenished. The water replenished from the water tank 13 is supplied to a cooler 12 for cooling the water. The water recovery unit 10 cools the exhaust gas 35 discharged from the exhaust gas reheater 9 by the cooling water 37 having been cooled by the cooler 12, so that moisture condenses for water recovery. Further, the water discharged from the water recovery unit 10 is supplied again to the cooler 12, and is also supplied to a water treating unit 11 in which the water is pre-treated for supply to the gas turbine. Water 38 having been treated by the water treating unit 11 is supplied to the mixer 1 for spraying the water 22 into the atmosphere 21 to produce the humid air 23, and is also supplied to the air cooler 3 for cooling the high-pressure air 24. Thus, the water supplied to the mixer 1 is injected to the humid air 23 and then supplied to the compressor 2. On the other hand, the water supplied to the air cooler 3 is heated through the air cooler 3, and the heated water 40 is supplied to the humidifier 4. The humidifier 4 employs the water 40 to humidify the high-pressure air 25 supplied from the air cooler 3. The water after being used in the humidifier 4 is supplied again to the air cooler 3, as well as to the economizer 8. In the economizer 8, the water 32 discharged from the humidifier 4 and flowing in the water circulation system is heated by the exhaust gas 31, serving as a heat source, from which heat has been recovered in the recuperator 7, thereby producing heated water 33. The thus-heated water 33 is supplied to the humidifier 4. In such a way, the heated water is supplied to the humidifier 4 from not only the air cooler 3, but also from the economizer 8.

A series of operations in the gas turbine plant of this embodiment will be described below. The mixer 1 sprays the water 22 into the sucked atmosphere 21 to produce the humid air 23. The mass percentage of the sprayed water 22 is about 3.5% of the atmosphere 21. The produced humid air 23 is compressed by the compressor 2 to a predetermined pressure ratio of 20. A part of the thus-compressed high-pressure air 24 is introduced to the air cooler 3. The air cooler 3 cools the high-pressure air 24 at about 300°C down to about 100°C by using the recovered water 38 from the water recovery unit 10 and the recovered water 39 from the humidifier 4. The cooled high-pressure air 25 is supplied to the humidifier 4. The humidifier 4 humidifies the high-pressure air 25 to relative humidity of about 95% by using the water 40 heated through the air cooler 3 and the water 33 heated through the economizer 8. The humid air 26 thus obtained with the humidification is supplied to the recuperator 7. The recuperator 7 overheats the humid air 26 at about 150°C up to about 550°C by using the exhaust gas 30 from the turbine 6. The overheated humid air 27 is introduced to the combustor 5. In the combustor 5, the humid air 27 and the fuel 28 are mixed with each other and burnt to produce the combustion gas 29. The temperature of the combustion gas 29 is about 1350°C. The generated combustion gas 29 is supplied to the turbine 6. In the turbine 6, the combustion gas 29 performs expansion work to generate shaft motive power of the turbine 6. The generated shaft motive power rotates not only the compressor 2 coupled to the turbine 6 through the intermediate shaft 15, but also the generator 14 coupled to the compressor 2. The exhaust gas 30 discharged from the turbine 6 is supplied to the recuperator 7. In the recuperator 7, the exhaust gas 30 is employed as a heat source for overheating the humid air 26. Through the heat recovery, the exhaust gas 30 at about 600°C turns to the exhaust gas 31 at about 250°C, which is supplied to the economizer 8. In the economizer 8, the exhaust gas 31 is employed as a heat source for heating the water 32. Through the heat recovery, the exhaust gas 34 at about 110°C is discharged and introduced to the exhaust gas reheater 9. In the exhaust gas reheater 9, the exhaust gas 34 is employed as a heat source for heating the exhaust gas 36 discharged from the water recovery unit 10 to prevent the generation of white smoke. The exhaust gas 35 from which heat has been recovered in the exhaust gas reheater 9 is introduced to the water recovery unit 10. In the water recovery unit 10, the exhaust gas 35 is cooled by the cooling water 37 to condense moisture so that water is recovered. The exhaust gas 36 from which the water has been recovered is introduced to the exhaust gas reheater 9. In the exhaust gas reheater 9, the exhaust gas 36 is heated up to about 90°C to prevent the generation of white smoke. The heated exhaust gas 41 is discharged to the atmosphere.

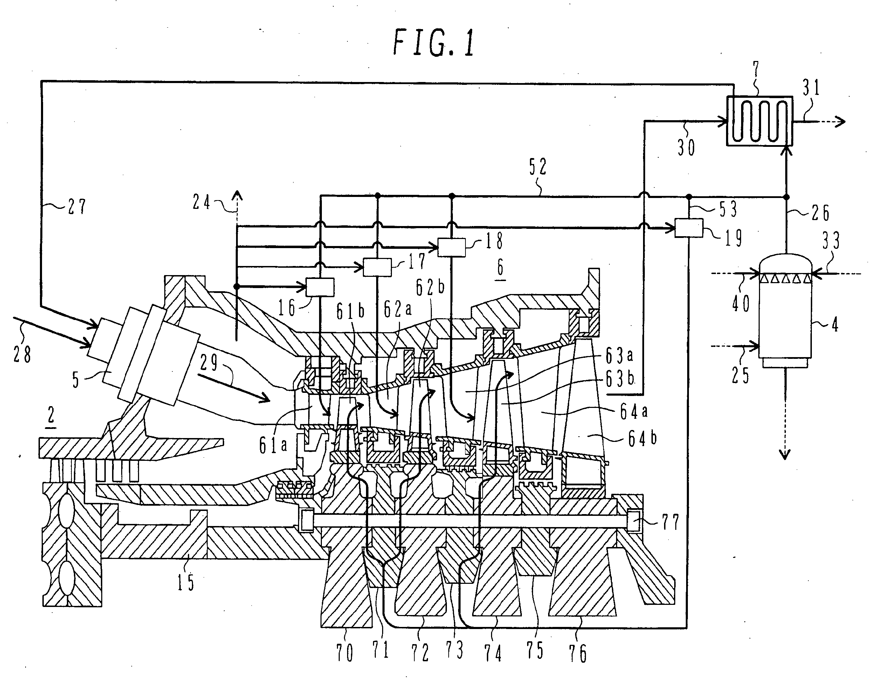

The coolant channels formed for cooling of high-temperature components of the turbine 6 will be described below with reference to Fig. 1 as well. Fig. 1 is a schematic partial sectional view of the gas turbine plant shown in Fig. 2, including the compressor 2, the combustor 5, the turbine 6, the intermediate shaft 15, the humidifier 4, the recuperator 7, the first coolant mixer 16, the second coolant mixer 17, the third coolant mixer 18, and the fourth coolant mixer 19.

The turbine 6 includes plural stages of blade trains along the flow of the combustion gas. In this embodiment, there are four stages of blade trains. One stage comprises a stationary blade train including a plurality of stator blades arranged in the circumferential direction and fixed to a casing, and a rotating blade train including a plurality of rotor blades arranged in the circumferential direction and fixed to a rotor. The rotor of the turbine 6 is constructed by interconnecting a first stage disk 70, a spacer 71, a second stage disk 72, a spacer 73, a third stage disk 74, a spacer 75, and a fourth stage disk 76 in this order from the upstream side. Then, those disks and the spacers are firmly fixed together by stacking bolts 77, to thereby form the rotor serving as a rotating body. The stator blades and the rotor blades are alternately arranged in the order of a first stage stator blade 61a, a first stage rotor blade 61b, a second stage stator blade 62a, a second stage rotor blade 62b, a third stage stator blade 63a, a third stage rotor blade 63b, a fourth stage stator blade 64a, and a fourth stage rotor blade 64b from the upstream side. Further, the first stage rotor blade 61b is fixed to the first stage disk 70. Likewise, the second stage rotor blade 62b is fixed to the second stage disk 72, the third stage rotor blade 63b is fixed to the third stage disk 74, and the fourth stage rotor blade 64b is fixed to the fourth stage disk 76, respectively. Note that, in this embodiment, the upstream side along the flow of the combustion gas 29 (i.e., the side closer to the combustor 5) is referred to as the turbine upstream side, and the direction of flow of the combustion gas 29 is a downward direction.

In this embodiment, three rotor blades, i.e., the first stage rotor blade 61b, the second stage rotor blade 62b, and the third stage rotor blade 63b, are cooled by the humid air 26 supplied from the humidifier 4 through the coolant channels. Those rotor blades have respective cooling channels formed therein to cool them, and inlets of the cooling channels are disposed on the rotor side of the turbine 6. A part 53 of the humid air 26 supplied from the humidifier 4 and the high-pressure air 24 extracted from the compressor 2 are introduced to the fourth coolant mixer 19 that serves as means for changing the moisture content of the humid air. The fourth coolant mixer 19 produces a coolant suitable for cooling the rotor blades. In this embodiment, the coolant having the moisture content adjusted by the fourth coolant mixer 19 is introduced to a shaft end on the turbine downstream side and is guided into the rotor of the turbine 6. In the rotor of the turbine 6, the first stage disk 70 is of a solid structure, while the other disks 72, 74 and 76 and the spacers 71, 73 and 75 are each of a hollow structure. Accordingly, the coolant introduced to the shaft end on the turbine downstream side flows through respective central holes of the disks and the spacers each having a hollow structure. The coolant is then introduced to the desired rotor blades through, e.g., slits formed to extend in the radial direction of the rotor. Thus, the coolant channels for supplying the coolant to the rotor blades are provided as routes made up of a line extending from the humidifier 4 to the rotor shaft end through the fourth coolant mixer 19 and of passages formed by the central holes and slits in the rotor. The coolant having passed through the coolant channels is introduced to the inlets of respective cooling channels formed in the first stage rotor blade 61b, the second stage rotor blade 62b, and the third stage rotor blade 63b. Then, the coolant cools the rotor blades while flowing through the cooling channels in the rotor blades. After cooling the rotor blades, the coolant is finally discharged into the gas path. In addition, the coolant further cools wall surfaces of the coolant channels formed in the rotor.

The first stage stator blade 61a, the second stage stator blade 62a, and the third stage stator blade 63a are also cooled by the humid air 26 supplied from the humidifier 4. The first stage stator blade 61a, the second stage stator blade 62a, and the third stage stator blade 63a have respective cooling channels formed therein to cool them, and inlets of the cooling channels are disposed on the casing side of the turbine 6. A part 52 of the humid air 26 supplied from the humidifier 4 and the high-pressure air 24 extracted from the compressor 2 are introduced to the first coolant mixer 16, the second coolant mixer 17 and the third coolant mixer 18 each of which serves as means for changing the moisture content of the humid air. These three coolant mixers produce coolants suitable for cooling the first stage stator blade 61a, the second stage stator blade 62a, and the third stage stator blade 63a, respectively. Thus, the coolant channels for supplying the coolants to the stator blades are provided as lines extending from the humidifier 4 to the inlets of the cooling channels in the stator blades through the respective coolant mixers corresponding to the stator blades. Then, the coolant passing through the coolant channel corresponding to the first stage stator blade 61a and produced by the first coolant mixer 16 is supplied to the inlet of the cooling channel in the first stage stator blade 61a. Similarly, the coolant produced by the second coolant mixer 17 is supplied to the inlet of the cooling channel in the second stage stator blade 62a, and the coolant produced by the third coolant mixer 18 is supplied to the inlet of the cooling channel in the third stage stator blade 63a. After cooling the corresponding stator blades, the coolants are finally discharged into the gas path. In addition, the coolants further cool wall surfaces of the coolant channels while flowing through them.

Let herein compare with the case of producing the coolant for the rotor blades and the stator blades by using one coolant mixer. For the comparison, a description is first made of a method of setting the moisture content of the coolant when the coolant is produced by using one coolant mixer.

Generally, from the viewpoint of cooling capability, steam has a larger heat transfer rate than air. Therefore, the larger the moisture content, the higher is the cooling capability. For that reason, when the high-pressure air extracted from the compressor and the humid air humidified by the humidifier are mixed with each other, the proportion of the humid air is preferably as large as possible to maximize the moisture content of the coolant. Also, from the viewpoint of reliability, when the saturation steam amount of the coolant exceeds below the steam amount actually contained in the coolant, the steam contained in the coolant in amount beyond the saturation steam amount cannot exist in a gaseous state. Therefore, the steam in amount beyond the saturation steam amount condenses with phase change into a liquid. If the coolant flows through the channels in the turbine rotor and the rotor blades in the state where the coolant includes liquid droplets as a result of the condensation, the channels undergo local impacts due to the momentums of the liquid droplets floating at high speeds. Also, if the condensed liquid droplets are evaporated again in the channels, the channels are locally quickly cooled with absorption of the evaporation latent heat, thus resulting in increased thermal stresses. This enhances a possibility that the increased thermal stresses may cause cavitation erosion of the channels. Another possibility is that impurities mixed in the coolant may stick as scale to the wall surface upon evaporation of the coolant and block off the channels, or that the scale may act as a resistance for heat transfer to lower the cooling efficiency in the relevant area, thereby increasing the wall surface temperature. Eventually, deterioration of reliability may be resulted. In other words, moisture is desirably injected in amount as large as possible from the viewpoint of cooling capability, but it is essential to avoid a possibility that the saturation steam amount of the coolant exceeds below the steam amount actually contained in the coolant. Incidentally, the saturation steam amount is greatly affected by temperature such that it increases as the temperature rises.

Moreover, the flow rate of the coolant in the channel is determined primarily depending on the differential pressure between the supply pressure and the back pressure (i.e., the pressure of the coolant when the coolant is discharged into the gas path after having cooled the rotor blades), the cross-sectional area of the channel, and the pressure loss in the channel. Taking into account those parameters, the system is designed so that the coolant flows at a necessary minimum flow rate. Thus, the pressure of the coolant eventually changes from the supply pressure to the back pressure, while it locally changes depending on the channel conditions. Also, because of the coolant being a compressive fluid, when the coolant expands, the coolant temperature lowers and hence the saturation steam amount of the coolant reduces. Accordingly, the larger the expansion ratio of the coolant, the larger is an amount by which the coolant temperature lowers, and so is an amount by which the saturation steam amount of the coolant reduces. From those reasons, a mixing ratio between the high-pressure air extracted from the compressor and introduced to the coolant mixer and the humid air humidified by the humidifier is desirably set such that the saturation steam amount of the coolant will not exceed below the steam amount actually contained in the coolant even after the temperature has lowered due to expansion of the coolant in the entire channels.

As stated above, the flow rate of the coolant in the channels is determined primarily depending on the differential pressure between the supply pressure and the back pressure, the cross-sectional area of the channel, and the pressure loss in the channel. As compared with the differential pressure at the first stage rotor blade 61b, the differential pressure at each of the second stage rotor blade 62b and the third stage rotor blade 63b is much larger because the back pressure lowers at the second stage rotor blade 62b and the third stage rotor blade 63b. To prevent the coolant from flowing at a flow rate in excess of the necessary level, therefore, flow resistances such as orifices must be provided for pressure reduction in the respective coolant channels led to the second stage rotor blade 62b and the third stage rotor blade 63b. This lowers the coolant pressure at the second stage rotor blade 62b and the third stage rotor blade 63b, and hence reduces the saturation steam amount of the coolant. Accordingly, as the moisture content of the coolant is increased to enhance the effect of cooling the first stage rotor blade 61b, amounts by which moisture is condensed at the second stage rotor blade 62b and the third stage rotor blade 63b increase, thus resulting in a fear of deterioration of reliability. For that reason, in order to suppress or lessen the condensation of the coolant flowing through the coolant channel led to each rotor blade, the moisture content requires to be adjusted by the coolant mixer. In other words, to lessen the condensation of the coolant, the flow rate of the humid air humidified by the humidifier and supplied to the coolant mixer must be set fairly smaller than that of the high-pressure air extracted from the compressor and supplied to the coolant mixer. As described above, using one coolant mixer accompanies with a problem as follows. If priority is put on the cooling efficiency for the first stage rotor blade 61b, there arise a possibility of deteriorating reliability of the second stage rotor blade 62b and the third stage rotor blade 63b. Conversely, if priority is put on reliability in the entire system, the humid air effective in cooling the first stage rotor blade 61b cannot be used, and the performance of the overall plant deteriorates.

Additionally, when the coolant is supplied to cool rotating components including the rotor blades, it is difficult from the structural point of view to form independent channels within the rotor, through which coolants having respective moisture contents suitable for cooling the corresponding rotor blades flow. This means that, in supplying the coolant to cool rotating components including the rotor blades, it is difficult in principle to change the moisture content of the coolant supplied to each of the rotating components. Stated another way, when the rotor blades and the stator blades are all cooled by using only the humid air supplied from one coolant mixer as in the related art, the steam amount in the coolant must have been fairly suppressed just for the purpose of preventing condensation of the coolant in the coolant channel and the cooling channel which are led to the third stage rotor blade 63b.

Further, although setting the moisture content of the coolant in consideration of primarily the third stage rotor blade 63b is desirable from the viewpoint of reliability, this setting raises another problem that the humid air effective in cooling the first stage rotor blade 61b, which requires maximum cooling efficiency, cannot be used, and hence the performance of the overall plant deteriorates.

In contrast, this embodiment includes the coolant mixer serving as means for changing the moisture content of the humid air and disposed downstream of a branch point where the humid air 26 supplied form the humidifier 4 is branched into the coolant channel led to the stator blades and the coolant channel led to the rotor blades. If the coolant mixer is disposed upstream of the branch point, it would be required to set the moisture content of the coolant in match with a portion where moisture in the coolant is most apt to condense, i.e., to fairly suppress the moisture content of the coolant supplied to other portions. On the other hand, with the provision of the coolant mixer disposed downstream of the branch point, it is possible to suppress the moisture content of the coolant supplied to the portion where moisture in the coolant is most apt to condense, and at the same time to optimize the moisture content of the coolant supplied to other portions. Thus, high reliability can be ensured and the performance of the overall plant can be improved.

Additionally, the coolant mixer disposed downstream of the branch point is not necessarily disposed in each of all the coolant channels. In this embodiment, for example, the coolant mixer may be disposed only in the coolant channel led to the third stage stator blade 63a and the coolant channel led to a rotor blade system. More specifically, as described above, because the moisture content of the coolant supplied to the rotor blade system for cooling the rotating components requires to be set in match with the third stage rotor blade 63b, the moisture content of that coolant must be fairly suppressed. On the stator blade side, it is conceivable that the coolant mixer is disposed in the coolant channel led to the third stage stator blade 63a to suppress the moisture content of the coolant supplied to the third stage stator blade 63a, and no coolant mixers are disposed in the coolant channels led to the first stage stator blade 61a and the second stage stator blade 62a so that the moisture introduced from the humidifier is supplied in all amount to the first stage stator blade 61a and the second stage stator blade 62a. Even in such a case, effective humid air can be utilized for supply to the first stage stator blade 61a that requires to be cooled with maximum efficiency.

In this embodiment, the coolant mixers 16, 17 and 18 each serving as means for changing the moisture content of the humid air are disposed in a one-to-one relation to the coolant channels led to the inlets of the cooling channels in the stator blades. Therefore, the moisture content of the coolant can be set corresponding to each of the stator blades. For example, when the high-pressure air 24 extracted from the compressor 2 is mixed with the humid air having relative humidity of about 95% and supplied from the humidifier 4, the relative humidity must have been reduced to about 30% if the coolant is supplied to all of the stator blades and the rotor blades by using only one coolant mixer. This is because of the necessity of requiring the relative humidity to be adapted for the humid air supplied to the coolant channel and the cooling channel of the third stage rotor blade 63b in which moisture in the coolant is most apt to condense. In contrast, in this embodiment, the relative humidity of the coolant produced in the first coolant mixer 16 can be set higher than that of the coolant produced in the fourth coolant mixer 19. More practically, the coolant having relative humidity of about 90%, which is most effective in cooling the first stage stator blade 61a, can be produced by the first coolant mixer 16 and supplied to the first stage stator blade 61a. Likewise, the second coolant mixer 17 and the third coolant mixer 18 can produce the coolants having relative humidity of about 60% and 40% and supply those coolants to the second stage stator blade 62a and the third stage stator blade 63a, respectively. In other words, the relative humidity of the coolant supplied to the first stage stator blade 61a is not required to be the same as that of the coolant supplied to the third stage rotor blade 63b. Accordingly, it is possible to ensure reliability of the coolant supplied to the third stage rotor blade 63b, to increase the efficiency in cooling the first stage stator blade 61a while reducing the flow rate of the cooling supplied to the first stage stator blade 61a, and to improve the thermal efficiency of the plant. Further, since the humid air is also supplied to the rotor blades, the coolants for cooling the stator blades and the rotor blades can be unified to the humid air alone, and the arrangement of the coolant channels can be simplified.

When the compressed air extracted from the compressor is only one kind, i.e., the high-pressure air 24, as in this embodiment, the relative humidity of the coolant supplied to the stator blade on the rear-stage side requires to be set lower than that of the coolant supplied to the stator blade on the front-stage side. The reason is that while the coolants are supplied under the same supply pressure from the coolant mixers 16, 17 and 18, the back pressure differs depending on the stage and therefore the differential pressure between the supply pressure and the back pressure increases toward the rear-stage side. This is, however, not always applied to the case in which the compressed air is extracted from the compressor at plural points under different pressures. In that case, the supply pressure of the coolant supplied from the coolant mixer to each stator blade and the back pressure at that stator blade are both changed depending on which one of the coolant mixers is used, and it cannot be always said that the differential pressure increases toward the rear-stage side.

Further, respective channels are provided for supplying the compressed air extracted from the compressor 2 to the coolant mixers 16, 17, 18 and 19, and the bleed hole for extracting the compressed air from the compressor 2 is formed in one position midway the gas path of the compressor 2. While, in this embodiment, the compressed air is extracted from a compartment around the combustor 5, the position of the bleed hole is of no importance so long as the high-pressure compressed air can be extracted. The coolant mixers 16, 17 and 18 are provided in a one-to-one relation to the coolant channels for cooling the corresponding stator blades. There is no necessity of supplying the high-pressure compressed air to, in particular, the third coolant mixer 18 for supplying the coolant to the third stage stator blade 63a. With the structure of this embodiment that the bleed hole for extracting the compressed air from the compressor 2 is formed in one position midway the gas path of the compressor 2 and the high-pressure air 24 extracted through the bleed hole is supplied to the coolant mixers 16, 17, 18 and 19, however, the channel for extracting the compressed air from the compressor 2 can be constituted as one line and hence the structure can be simplified.

The pressure required for the coolant to cool each stator blade lowers in the order of the first stage stator blade 61a, the second stage stator blade 62a, and the third stage stator blade 63a. In view of such a characteristic, it is conceivable to supply the compressed air to the coolant mixers 16, 17 and 18 under different pressures.

More specifically, three bleed holes, i.e., a high-pressure bleed hole, a medium-pressure bleed hole and a low-pressure bleed hole, may be provided along the gas path of the compressor 2 from the upstream side so that the compressed air is extracted from the gas path of the compressor 2 under respective pressures suitable for the coolant mixers 16, 17 and 18. In the case of providing the three bleed holes successively along the gas path of the compressor 2 from the upstream side, however, the channels for guiding the extracted air from the compressor 2 to the coolant mixers 16, 17 and 18 are complicated and manufacturability deteriorates. Further, because the bleed holes are formed in a gas path wall surface of the compressor 2 at three positions, the aerodynamic performance is possibly adversely affected. For that reason, it is advantageous that the bleed hole for extracting the compressed air from the compressor 2 is formed as the high-pressure bleed hole in one position midway the gas path of the compressor 2, while the low-pressure bleed hole and the medium-pressure bleed hole are omitted from the gas path of the compressor 2. With such an arrangement, the number of the bleed holes formed in the gas path wall surface of the compressor 2 is minimized and the aerodynamic performance is improved correspondingly.

As described above, since the gas turbine plant of this embodiment includes the coolant mixer for each of the stator blades, it is possible to produce the coolants suitable for the respective blades from the viewpoints of cooling efficiency and reliability. As a result, high reliability can be ensured and the thermal efficiency of the plant can be increased.

### [Second Embodiment]

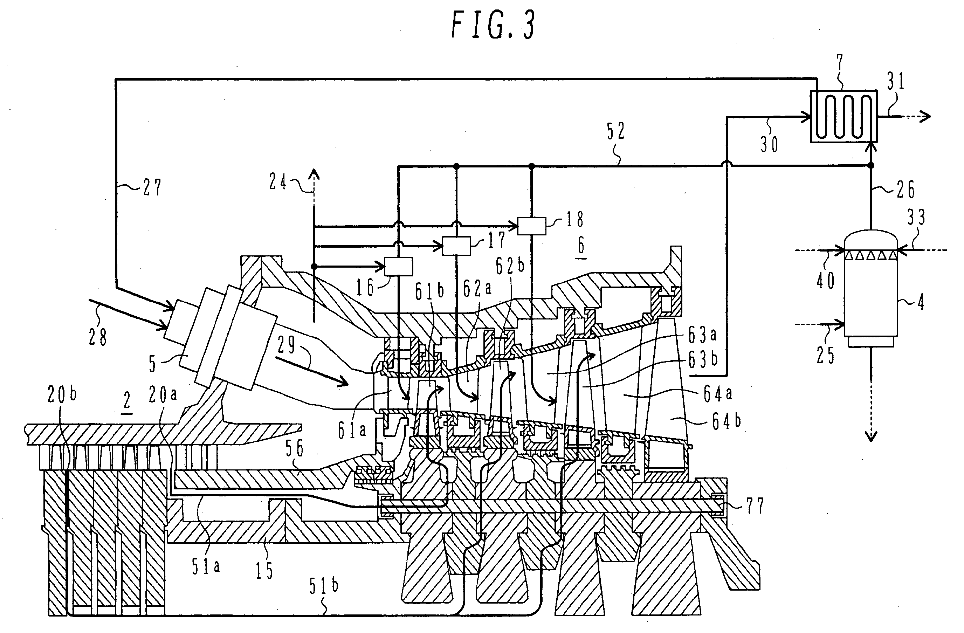

Fig. 3 is a schematic partial sectional view showing a second embodiment of the gas turbine plant. This second embodiment differs from the first embodiment in that the humid air 26 humidified by the humidifier 4 is not used to cool the rotating components, such as the rotor blades and the turbine rotor.

First, a description is made of a compressor bleed channel 51a. A high-pressure side slit 20a is formed in an inner peripheral wall of the gas path of the compressor 2, and a part of the compressed air flowing through the gas path is extracted as a coolant through the slit 20a. The extracted coolant is introduced to the turbine 6 via a space defined by the intermediate shaft 15 coupling the compressor 2 and the turbine rotor to each other and by a partition wall 56. Then, the coolant is introduced to the first stage rotor blade 61b through a coolant channel formed in the turbine rotor. The first stage rotor blade 61b has a cooling channel formed therein, and an inlet of this cooling channel is disposed in the turbine rotor side. Accordingly, the coolant extracted through the slit 20a in the compressor 2 is introduced to the inlet of the cooling channel in the first stage rotor blade 61b after passing through the coolant channel formed in the turbine rotor. After cooling the first stage rotor blade 61b, the coolant is finally discharged into the gas path. Also, the coolant cools an inner wall surface of the compressor bleed channel 51a, i.e., of the space defined by the intermediate shaft 15 and the partition wall 56, and an inner wall surface of the coolant channel in the turbine rotor while flowing through those channels.

Next, a description is made of a compressor bleed channel 51b. A medium- and low-pressure side slit 20b is formed in the inner peripheral wall of the gas path of the compressor 2, and a part of the compressed air flowing through the gas path is extracted as a coolant through the slit 20b. The slit 20b is disposed on the lower pressure side than the above-described slit 20a. The extracted coolant is introduced to the turbine 6 via a hollow portion of the intermediate shaft 15. Then, the coolant is introduced to the second stage rotor blade 62b and the third stage rotor blade 63b through coolant channels formed in the turbine rotor. The second stage rotor blade 62b and the third stage rotor blade 63b have cooling channels formed therein, and inlets of these cooling channels are disposed in the turbine rotor side. Accordingly, the coolant extracted through the slit 20b in the compressor 2 is introduced to the inlets of the cooling channels in the second stage rotor blade 62b and the third stage rotor blade 63b after passing through the coolant channel formed in the turbine rotor. After cooling the second stage rotor blade 62b and the third stage rotor blade 63b, the coolant is finally discharged into the gas path. Also, the coolant cools an inner wall surface of the compressor bleed channel 51b, i.e., of the hollow portion of the intermediate shaft 15, and an inner wall surface of the coolant channel in the turbine rotor while flowing through those channels. While the compressed air is extracted from two positions in the compressor 2 in this embodiment, the compressed air may be extracted from three or more positions. By increasing the number of positions from which the compressed air is extracted from the compressor, the coolant can be supplied under the pressure more suitable for the turbine rotor blade in each stage.

In the first embodiment shown in Fig. 1, not only the coolant for cooling the stationary parts including the stator blades, but also the coolant for cooling the rotating parts including the rotor blades are produced by mixing the humid air 26 humidified by the humidifier 4 with the high-pressure air 24 extracted from the compressor 2. Therefore, the coolant produced by the fourth coolant mixer 19 requires to be supplied from the rotary shaft end of the turbine rotor. Further, because the coolant is transferred from the stationary system to the rotating system, a sealing structure must be provided to prevent the coolant from leaking to the exterior of the turbine through the rotary shaft end of the turbine rotor.

The coolants for cooling the stationary parts including the stator blades are produced by the first coolant mixer 16, the second coolant mixer 17 and the third coolant mixer 18 corresponding to the respective stator blades. For the coolant for cooling the rotating parts including the rotor blades, however, it is difficult from the structural point of view to form independent channels in the rotor, through which coolants having moisture contents suitable for cooling the respective rotor blades flow. For that reason, one kind of coolant is selected for cooling the rotating parts including the rotor blades. Also, as described above, a coolant generally has physical properties more effective in cooling as the moisture content in the coolant increases. Accordingly, from the viewpoint of cooling the first stage rotor blade 61b at which the atmosphere temperature in the gas path is maximum, the coolant preferably has a larger moisture content and a lower temperature. Considering that the coolant having the same physical properties is also supplied to the second stage rotor blade 62b and the third stage rotor blade 63b, however, increasing the moisture content in the coolant is not always preferable. The reason is that as the moisture content in the coolant is increased to enhance the effect of cooling the first stage rotor blade 61b, the amount by which moisture is condensed at the second stage rotor blade 62b and the third stage rotor blade 63b increases, thus possibly resulting in deterioration of reliability. In order to suppress or lessen the condensation of the coolant at the second stage rotor blade 62b and the third stage rotor blade 63b, the moisture content requires to be adjusted by the fourth coolant mixer 19. In other words, to lessen the condensation of the coolant, the flow rate of the humid air 26 humidified by the humidifier 4 and supplied to the fourth coolant mixer 19 must be set fairly smaller than that of the high-pressure air 24 extracted from the compressor 2 and supplied to the fourth coolant mixer 19. Thus, the coolant route in the first embodiment accompanies with a problem as follows. If priority is put on the cooling efficiency for the first stage rotor blade 61b, there arise a possibility of deteriorating reliability of the second stage rotor blade 62b and the third stage rotor blade 63b. Conversely, if priority is put on reliability in the entire system, the humid air effective in cooling the first stage rotor blade 61b cannot be used, and the performance of the overall plant deteriorates.

In contrast, in this second embodiment, the compressed air extracted from the compressor 2 is employed as the coolant for cooling the rotating parts including the rotor blades. Since the coolant used in this second embodiment for cooling the rotating parts does not contain the humid air 26 at all, it is possible to suppress moisture in the coolant from condensing at the second stage rotor blade 62b and the third stage rotor blade 63b. Accordingly, those rotor blades can be cooled without deteriorating the blade reliability. As compared with the first embodiment, this second embodiment seems to have inferior cooling efficiency because the moisture content of the coolant for cooling the rotating parts is relatively small. In the first embodiment, however, the humid air 26 is in fact hardly supplied to the fourth coolant mixer 19 for the purpose of ensuring the blade reliability. Thus, the cooling efficiency comparable to that in the first embodiment can also be obtained with this second embodiment.

Further, in the first embodiment, the coolant is supplied from the turbine rotor shaft end. Therefore, a special sealing structure must be provided to transfer the coolant from the stationary system to the rotating system without leaking the coolant to the exterior at the turbine rotor shaft end. Omission of such a special sealing structure leads to a cost reduction.

In this second embodiment, two kinds of compressed air extracted from two positions along the gas path of the compressor 2, at which pressures differ from each other, are used to respectively cool the different rotor blades. More specifically, the high-pressure compressed air extracted through the slit 20a is used to cool the first stage rotor blade 61b that requires the high-pressure compressed air for cooling, and the medium- and low-pressure compressed air extracted through the slit 20b is used to cool the second stage rotor blade 62b and the third stage rotor blade 63b that do not require the compressed air at a so high pressure level for cooling. Unlike the case of cooling all the rotor blades only by the high-pressure compressed air extracted through the slit 20a, therefore, the pressure of the coolant supplied to the second stage rotor blade 62b and the third stage rotor blade 63b can be made lower than that of the coolant supplied to the first stage rotor blade 61b. Then, the total flow rate of the coolants extracted from the compressor 2 can be reduced. This results in the effect of further increasing the thermal efficiency of the plant. In addition, since the compressor bleed channel 51a and the compressor bleed channel 51b, both serving as the channels for supplying the coolants to the rotating parts, are obtained with a general gas turbine without modifications, very high reliability can be ensured.

According to the gas turbine plant of this embodiment, as described above, it is possible to lessen or suppress condensation of moisture in the coolant that may occur in the rotor blades on the rear-stage side in the known plant, and to achieve cooling of the rotor blades with high reliability. Also, the channels for supplying the coolants to the rotating parts are obtained with a general gas turbine without modifications, very high reliability can be ensured. Further, coolant routes for supplying the coolants under pressures at two or more different levels can be formed in the turbine rotor. In that case, the coolants under proper pressures can be supplied to the corresponding rotor blades in the respective stages, and the total flow rate of the coolants can be reduced. Hence, the thermal efficiency of the plant is increased.

### [Third Embodiment]

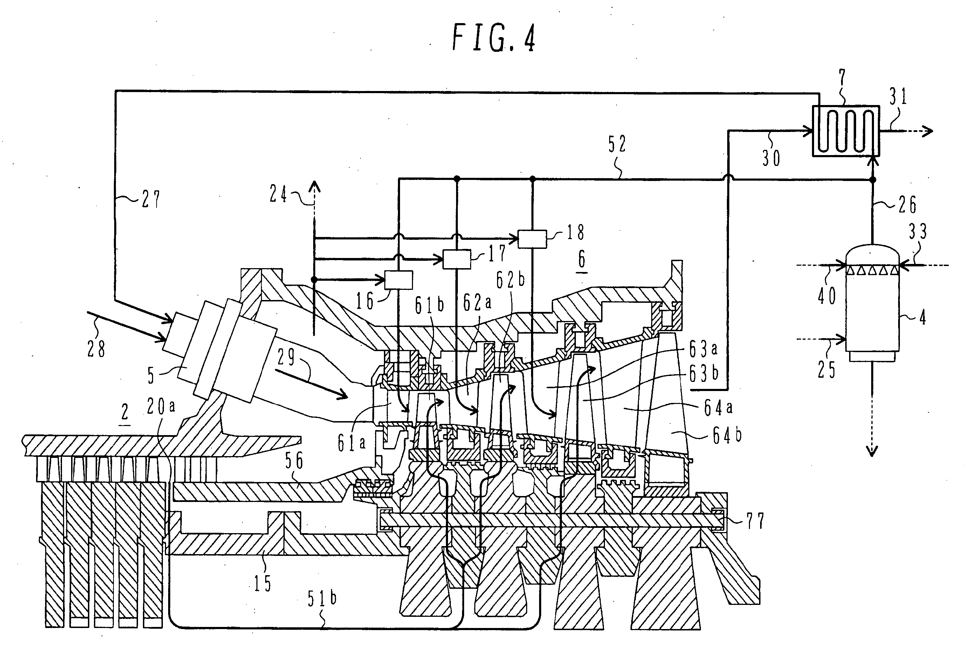

Fig. 4 is a schematic partial sectional view showing a third embodiment of the gas turbine plant. This third embodiment differs from the second embodiment in that the high-pressure compressed air extracted through the slit 20a provided in the high-pressure stage of the compressor 2 is also used as the coolant for cooling the second stage rotor blade 62b and the third stage rotor blade 63b instead of the medium-pressure compressed air extracted through the slit 20b provided in the medium-pressure stage of the compressor 2. Correspondingly, since only one kind of coolant is supplied from the compressor 2, the coolant is introduced to the turbine 6 through the hollow portion of the intermediate shaft 15 in this embodiment. The introduced coolant is supplied to the first stage rotor blade 61b, the second stage rotor blade 62b, and the third stage rotor blade 63b through coolant channels formed in the rotor.

The coolant channels for supplying the coolant to the first stage rotor blade 61b, the second stage rotor blade 62b, and the third stage rotor blade 63b in this embodiment are similar to channels for supplying a coolant to rotor blades in a typical gas turbine. In other words, using the compressed air extracted from one position midway the gas path of the compressor 2 to cool all the rotor blades provides a cooling system that is most reliable from the viewpoint of operation performance and is minimum in cost. By employing such a cooling system, an existing typical simple-cycle gas turbine can be easily modified into a gas turbine for use in the inventive gas turbine plant. Incidentally, the coolant channels for the rotor blades can be utilized, as they are, without modifications, and the coolants for cooling the stationary parts including the stator blades can be supplied by adding external piping.

### [Fourth Embodiment]

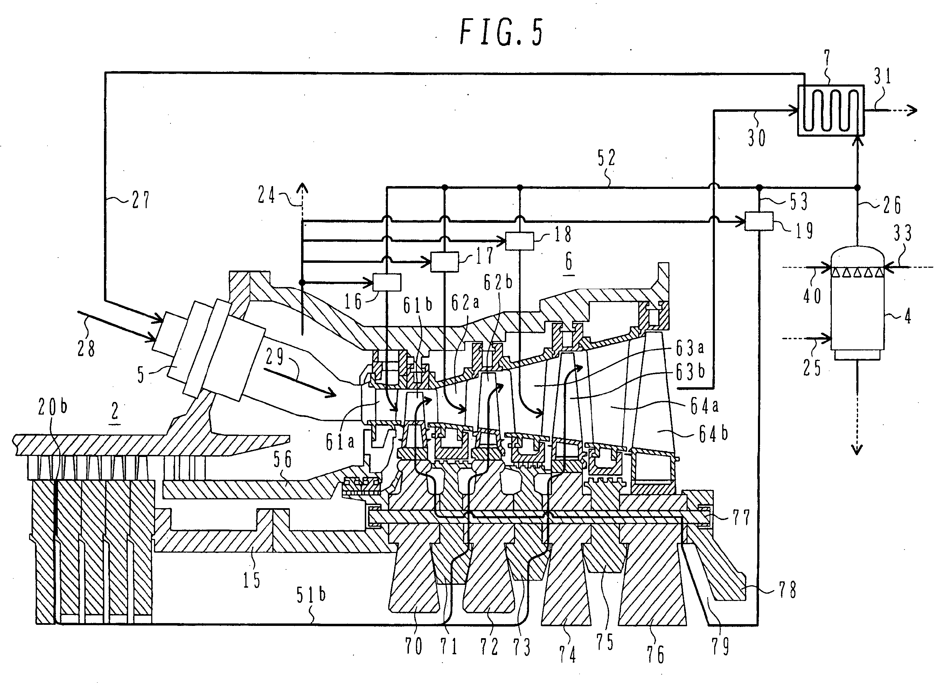

Fig. 5 is a schematic partial sectional view showing a fourth embodiment of the gas turbine plant. This fourth embodiment differs from the second embodiment in that the first stage rotor blade 61b is cooled by using the coolant supplied from the fourth coolant mixer 19 which mixes the humid air 26 and the high-pressure air 24 extracted from the compressor 2. In this fourth embodiment, the coolant from the fourth coolant mixer 19 is supplied from the turbine rotor shaft to a space 79 formed between the fourth stage disk 76 constituting the turbine rotor and a stub shaft 78. Then, the coolant is introduced to the first stage disk to which the first stage rotor blade 61b is fixed. After reaching a space 80 formed by the first stage disk 70 and the spacer 71, the coolant is introduced to the inlet of the cooling channel formed in the first stage rotor blade 61b. The coolant introduced to the inlet of the rotor blade cooling channel in such a manner cools the first stage rotor blade 61b while passing through the rotor blade cooling channel, and is finally discharged into the gas path.

Thus, in this embodiment, the fourth coolant mixer 19 produces, from the compressed air extracted from one position midway the gas path of the compressor 2 and the humid air produced by the humidifier, the coolant suitable for cooling the first stage rotor blade 61b and supplies the produced coolant through the turbine rotor shaft end. Accordingly, the humid air can be used to cool the first stage rotor blade 61b that requires most severe operating conditions among the rotor blades. While the structure is complicated and the manufacturing cost increases because a plurality of coolant channels are formed in the turbine rotor, the humid air having higher cooling efficiency can be utilized for cooling the first stage rotor blade 61b. As a result, the thermal efficiency of the entire plant can be increased eventually.

Moreover, there is no need of extracting the high-pressure compressed air from the compressor 2 for cooling of the second stage rotor blade 62b and the third stage rotor blade 63b. This enables the flow rate of the coolant extracted from the compressor 2 to be reduced in comparison with the case of cooling all the rotor blades only by the high-pressure compressed air. Consequently, the thermal efficiency of the entire plant can be further increased.

### [Fifth Embodiment]

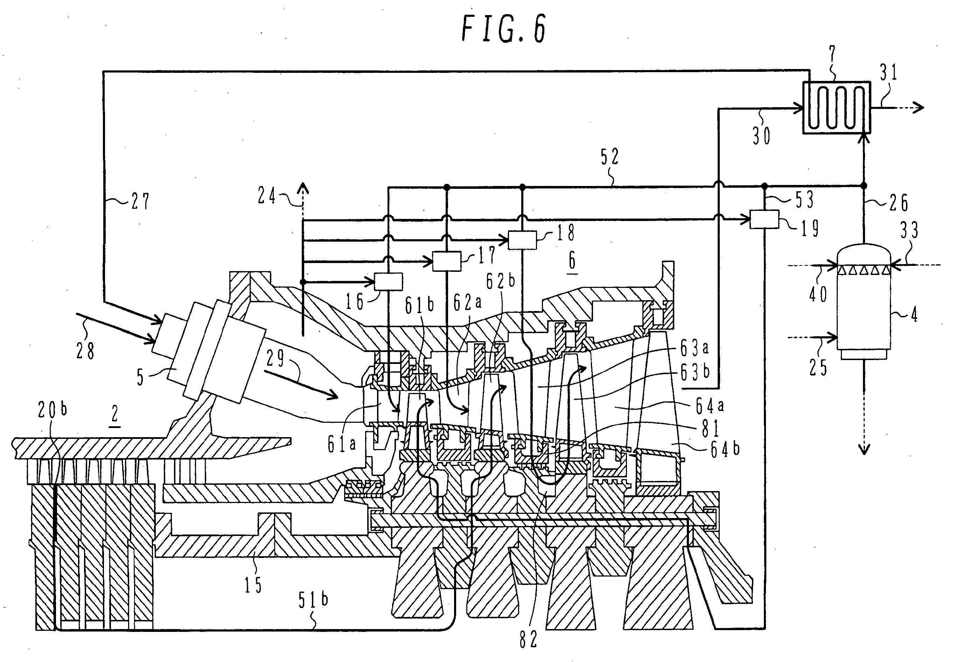

Fig. 6 is a schematic partial sectional view showing a fifth embodiment of the gas turbine plant. This fifth embodiment differs from the fourth embodiment in that the coolant after cooling or passing the third stage stator blade 63a is used to cool the third stage rotor blade 63b. In this fifth embodiment, the third coolant mixer 18 produces the coolant suitable for cooling the third stage rotor blade 63b and the third stage stator blade 63a. The produced coolant is first introduced to the inlet of the cooling channel formed in the third stage stator blade 63a from the turbine casing. After cooling the third stage stator blade 63a while passing through the cooling channel formed in the third stage stator blade 63a, the coolant is introduced to a space in a diaphragm 81 engaged with a lower a lower portion of the third stage stator blade 63a. After passing the space in the diaphragm 81, the coolant is introduced to the inlet of the cooling channel in the third stage rotor blade 63b via a space 82 formed by the spacer and the third stage disk. The coolant introduced to the inlet of the cooling channel in the third stage rotor blade 63b cools the third stage rotor blade 63b while passing through the cooling channel therein. Finally, the coolant is discharged into the gas path.

With this embodiment, the compressed air extracted from one position midway the gas path of the compressor and the humid air after cooling the stator blade is used to cool the rotor blades. It is therefore possible to utilize the humid air as the coolant for cooling the third stage rotor blade 63b, to cut the total flow rate of the coolant extracted from the compressor, and to increase the thermal efficiency of the entire plant. Further, the channels formed in the turbine rotor can be reduced and reliability can be improved.

### [Sixth Embodiment]

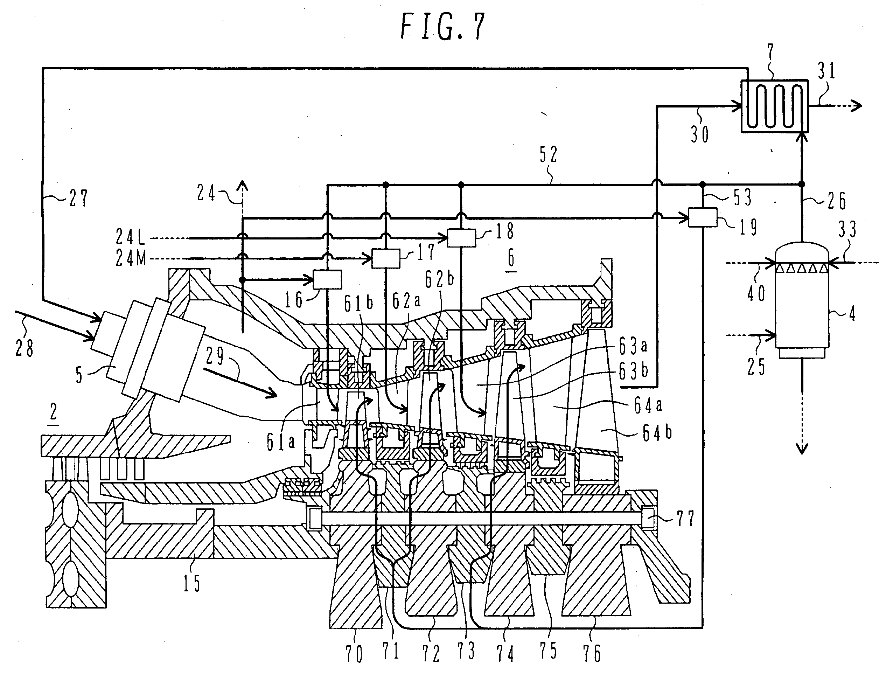

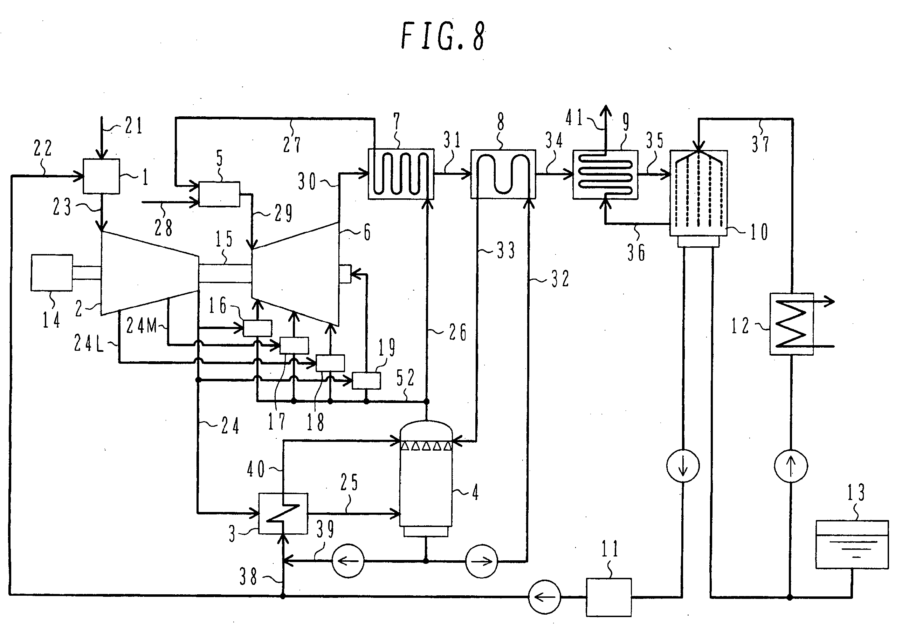

Fig. 8 is a schematic circuit diagram of a gas turbine plant according to this sixth embodiment. Fig. 7 is a schematic partial sectional view of the gas turbine plant shown in Fig. 8, including the compressor 2, the combustor 5, the turbine 6, the intermediate shaft 15, the humidifier 4, the recuperator 7, the first coolant mixer 16, the second coolant mixer 17, the third coolant mixer 18, and the fourth coolant mixer 19. Note that components denoted by the same symbols as those in Fig. 1 have the same functions.

This sixth embodiment differs from the first embodiment in that the compressed air supplied to the coolant mixers 16, 17, 18 and 19 disposed in the respective coolant channels for cooling the stator blades and the rotor blades is extracted from three positions in the compressor 2 as the high-pressure air 24, medium-pressure air 24M, and low-pressure air 24L, respectively. Then, the first coolant mixer 16 mixes a part of the high-pressure air 24 and a part of the humid air 26 humidified by the humidifier 4 with each other to produce a coolant suitable for cooling the first stage stator blade 61a. The second coolant mixer 17 mixes the medium-pressure air 24M partly extracted from the compressor 2 and a part of the humid air 26 humidified by the humidifier 4 with each other to produce a coolant suitable for cooling the second stage stator blade 62a. The third coolant mixer 18 mixes the low-pressure air 24L partly extracted from the compressor 2 and a part of the humid air 26 humidified by the humidifier 4 with each other to produce a coolant suitable for cooling the third stage stator blade 63a. The fourth coolant mixer 19 mixes a part of the high-pressure air 24 and a part of the humid air 26 humidified by the humidifier 4 with each other to produce a coolant suitable for cooling the first stage rotor blade 61b, the second stage rotor blade 62b, and the third stage rotor blade 63b. Thus, taking into account that the required pressures of the compressed air differ for each of the coolant mixers 16, 17, 18 and 19, bleed holes for extracting the compressed air from the compressor 2 are formed in three positions along the gas path of the compressor where the compressed air has different pressures from each other, i.e., a high pressure, a medium pressure, and a low pressure. As a result, it is possible to employ the compressed air under different optimum pressures corresponding to the respective coolant mixers. While, in this embodiment, the bleed holes for extracting the compressed air from the compressor are formed in three positions subjected to different pressures, the bleed holes require to be formed in at least two positions. The reason is that, if there are at least two bleed holes, the coolant under pressure adjusted to a desired level can be obtained by extracting two kinds of the compressed air having different pressures and mixing those two kinds of the compressed air with each other.

Further, since the second coolant mixer 17 and the third coolant mixer 18 produce the coolants respectively by employing the medium-pressure air 24M and the low-pressure air 24L, the compressor power can be reduced in comparison with the case of employing only the high-pressure air 24. Therefore, the thermal efficiency of the plant can be increased.

Additionally, any of the gas turbine plants according to the first to fifth embodiments can also provide similar advantages to those obtainable with the sixth embodiment by supplying the compressed air from the compressor 2 to the respective coolant mixers at three different levels as the high-pressure air 24, the medium-pressure air 24M, and the low-pressure air 24L.

## Claims

1. A gas turbine plant comprising
a compressor (2) for producing compressed air (24),
a combustor (5) for mixing and burning the compressed air and fuel,
a turbine (6) rotated by combustion gas discharged from said combustor,
a humidifier (1, 4) for producing humid air (23, 26),
a plurality of stator blades arranged in said turbine and having cooling channels formed therein to allow passage of a coolant, and
coolant channels for introducing the humid air produced by said humidifier to inlets of the cooling channels in said stator blades,
said gas turbine plant **characterized by**
means (16-18) for mixing said humid air with the high-pressure air extracted from said compressor in proper mixing ratio to cool said stator blades and changing a moisture content of the humid air to different levels, said means being disposed in at least two of said coolant channels.

2. A gas turbine plant according to Claim 1, further comprising:
a channel for supplying the compressed air extracted from said compressor to said means for changing a moisture content of the humid air to different levels; and
a compressor bleed hole formed in one position midway a gas path of said compressor for extracting the compressed air from said compressor therethrough.

3. A gas turbine plant according to Claim 1, further comprising:
a channel for supplying the compressed air extracted from said compressor to said means for changing a moisture content of the humid air to different levels; and
a compressor bleed hole formed in at least two positions along a gas path of said compressor, at which pressure differs from each other, for extracting the compressed air from said compressor therethrough.

4. A gas turbine plant according to Claim 1, wherein a compressor-side inlet of a coolant channel led to an inlet of a cooling channel in a rotor blade is formed in at least two positions along a gas path of said compressor, at which pressure differs from each other.

5. A gas turbine plant according to Claim 1, wherein a compressor-side inlet of a coolant channel led to an inlet of a cooling channel in a rotor blade is formed in one position midway a gas path of said compressor.

6. The gas turbine plant according to claim 1, said gas turbine plant further comprising: a plurality of rotor blades arranged in said turbine and having cooling channels formed therein to allow passage of a coolant;
a branch point provided in said coolant channels for introducing the humid air produced by said humidifier to inlets of the cooling channels in said plurality of stator blades and rotor blades; and
means (16, 17, 18) for changing a moisture content of the humid air to different levels, said means being disposed downstream of the branch point provided in said coolant channels.

7. A gas turbine plant according to Claim 6, wherein said means for changing a moisture content of the humid air to different levels is disposed in one-to-one relation to said stator blades in each of said coolant channels led to the inlets of the cooling channels in said stator blades.

8. A method of cooling a gas turbine plant comprising
a compressor for producing compressed air,
a combustor for mixing and burning the compressed air and fuel,
a turbine rotated by combustion gas discharged from said combustor,
a humidifier for producing humid air,
a plurality of stator blades arranged in said turbine and having cooling channels formed therein to allow passage of a coolant, and
coolant channels for introducing the humid air produced by said humidifier to inlets of the cooling channels in said stator blades,
said method **characterized by**
mixing said humid air with the high-pressure air extracted from said compressor in proper mixing ratio to cool said stator blades, and changing a moisture content of the humid air in at least two of said coolant channels to different levels, thereby cooling said stator blades.

9. A method of cooling the gas turbine plant according to Claim 8, wherein the compressor air extracted from one position midway a gas path of said compressor and the humid air produced by said humidifier are used to cool a rotor blade.

10. A method of cooling the gas turbine plant according to Claim 8, wherein the compressor air extracted from one position midway a gas path of said compressor and the humid air after cooling or passing said stator blade are used to cool a rotor blade.

11. A method of cooling the gas turbine plant according to Claim 8, wherein the combustion gas is pressed through said turbine from the front-stage side to the rear-stage side, and relative humidity of the coolant supplied to said stator blade on the rear-stage side is lower than relative humidity of the coolant supplied to said stator blade on the front-stage side.

## Patentansprüche

1. Gasturbinenanlage, die Folgendes umfasst:
einen Kompressor (2) zum Erzeugen von Druckluft (24),
eine Brennkammer (5) zum Mischen und Verbrennen von Druckluft und Brennstoff,
eine Turbine (6), die durch das Brenngas, das von der Brennkammer abgeführt wird, gedreht wird,
eine Befeuchtungsvorrichtung (1, 4) zum Erzeugen von feuchter Luft (23, 26),
mehrere Leitschaufeln, die in der Turbine angeordnet sind und darin ausgebildete Kühlkanäle aufweisen, um einen Durchgang für ein Kühlmittel zu ermöglichen, und
Kühlmittelkanäle zum Einleiten der feuchten Luft, die durch die Befeuchtungsvorrichtung erzeugt wird, in Einlässe der Kühlkanäle in den Leitschaufeln,
wobei die Gasturbinenanlage **gekennzeichnet ist durch**:
Mittel (16-18) zum Mischen der feuchten Luft mit Hochdruckluft, die dem Kompressor entnommen wird, in einem geeigneten Mischungsverhältnis zum Kühlen von Leitschaufeln und zum Ändern eines Feuchtigkeitsgehalts der feuchten Luft auf unterschiedliche Gehalte, wobei die Mittel in wenigstens zwei der Kühlkanäle angeordnet sind.

2. Gasturbinenanlage nach Anspruch 1, die ferner Folgendes umfasst:
einen Kanal zum Zuführen der Druckluft, die dem Kompressor entnommen wird, zu Mitteln zum Ändern eines Feuchtigkeitsgehalts der feuchten Luft auf unterschiedliche Gehalte; und
ein Kompressor-Zapfloch, das bei einer Position in der Mitte eines Gaspfades des Kompressors ausgebildet ist, um die Druckluft von dem Kompressor dort hindurch zu extrahieren.

3. Gasturbinenanlage nach Anspruch 1, die ferner Folgendes umfasst:
einen Kanal zum Zuführen der Druckluft, die dem Kompressor entnommen wird, zu Mitteln zum Ändern eines Feuchtigkeitsgehalts der feuchten Luft auf unterschiedliche Gehalte; und
ein Kompressor-Zapfloch, das an wenigstens zwei Positionen entlang eines Gaspfades des Kompressors, an denen der Druck jeweils unterschiedlich ist, ausgebildet ist, um die Druckluft von dem Kompressor durch sie zu extrahieren.

4. Gasturbinenanlage nach Anspruch 1, wobei ein kompressorseitiger Einlass eines Kühlkanals, der zu einem Einlass eines Kühlkanals in einer Laufschaufel führt, an wenigstens zwei Positionen entlang eines Gaspfades des Kompressors, an denen der Druck jeweils unterschiedlich ist, ausgebildet ist.

5. Gasturbinenanlage nach Anspruch 1, wobei ein kompressorseitiger Einlass eines Kühlkanals, der zu einem Einlass eines Kühlkanals in einer Laufschaufel führt, bei einer Position in der Mitte eines Gaspfades des Kompressors ausgebildet ist.

6. Gasturbinenanlage nach Anspruch 1, wobei die Gasturbinenanlage ferner Folgendes umfasst:
mehrere Laufschaufeln, die in der Turbine angeordnet sind und in denen Kühlkanäle ausgebildet sind, um einen Durchgang für ein Kühlmittel zu ermöglichen;
einen Verzweigungspunkt, der in den Kühlkanälen vorgesehen ist, um die feuchte Luft, die durch die Befeuchtungsvorrichtung erzeugt wird, in die Einlässe der Kühlkanäle in den mehreren Leitschaufeln und Laufschaufeln einzuleiten; und
Mittel (16, 17, 18) zum Ändern eines Feuchtigkeitsgehalts der feuchten Luft auf unterschiedliche Gehalte, wobei die Mittel stromabwärts des Verzweigungspunktes, der in den Kühlkanälen vorgesehen ist, angeordnet sind.

7. Gasturbinenanlage nach Anspruch 6, wobei die Mittel zum Ändern eines Feuchtigkeitsgehalts der feuchten Luft auf unterschiedliche Gehalte in einem 1:1-Verhältnis zu den Leitschaufeln in jedem der Kühlkanäle, die zu den Einlässen der Kühlkanäle in den Leitschaufeln führen, angeordnet sind.

8. Verfahren zum Kühlen einer Gasturbinenanlage, die Folgendes umfasst:
einen Kompressor zum Erzeugen von Druckluft,
eine Brennkammer zum Mischen und Verbrennen von Druckluft und Brennstoff,
eine Turbine, die durch Brenngas, das von der Brennkammer abgeführt wird, gedreht wird,
eine Befeuchtungsvorrichtung zum Erzeugen von feuchter Luft,
mehrere Leitschaufeln, die in der Turbine angeordnet sind und darin ausgebildete Kühlkanäle aufweisen, um einen Durchgang für ein Kühlmittel zu ermöglichen, und
Kühlmittelkanäle zum Einleiten der feuchten Luft, die durch die Befeuchtungsvorrichtung erzeugt wird, in Einlässe der Kühlkanäle in den Leitschaufeln,
wobei das Verfahren **gekennzeichnet ist durch**:
Mischen von feuchter Luft mit Hochdruckluft, die dem Kompressor entnommen wird, in einem geeigneten Mischungsverhältnis zum Kühlen von Leitschaufeln, und zum Ändern eines Feuchtigkeitsgehalts der feuchten Luft in wenigstens zwei der Kühlkanäle auf unterschiedliche Gehalte, wodurch die Leitschaufeln gekühlt werden.

9. Verfahren zum Kühlen der Gasturbinenanlage nach Anspruch 8, wobei die Druckluft, die von einer Position in der Mitte eines Gaspfades des Kompressors entnommen wird, und die feuchte Luft, die durch die Befeuchtungsvorrichtung erzeugt wird, verwendet werden, um eine Laufschaufel zu kühlen.

10. Verfahren zum Kühlen der Gasturbinenanlage nach Anspruch 8, wobei die Druckluft, die von einer Position in der Mitte eines Gaspfades des Kompressors entnommen wird, und die feuchte Luft nach einem Kühlen oder Durchströmen der Leitschaufel verwendet werden, um eine Laufschaufel zu kühlen.

11. Verfahren zum Kühlen der Gasturbinenanlage nach Anspruch 8, wobei das Brenngas durch die Turbine von der vorn liegenden Seite zu der hinten liegenden Seite gedrückt wird und wobei die relative Feuchtigkeit des Kühlmittels, das der Leitschaufel auf der hinten liegenden Seite zugeführt wird, niedriger als die relative Feuchtigkeit des Kühlmittels ist, das der Leitschaufel auf der vorn liegenden Seite zugeführt wird.

## Revendications

1. Installation de turbine à gaz comprenant
un compresseur (2) pour produire de l'air comprimé (24),
un dispositif de combustion (5) pour mélanger et pour faire brûler l'air comprimé et un carburant,
une turbine (6) mise en rotation par les gaz de combustion déchargés depuis ledit dispositif de combustion,
un humidificateur (1,4) pour produire de l'air humide (23, 26),
une pluralité d'aubes de stator agencées dans ladite turbine et ayant des canaux de refroidissement formés à l'intérieur pour permettre le passage d'un agent de refroidissement, et
des canaux d'agent de refroidissement pour introduire l'air humide produit par ledit humidificateur vers des entrées des canaux de refroidissement dans lesdites aubes de stator,
ladite installation de turbine à gaz étant **caractérisée par**
un moyen (16-18) pour mélanger ledit air humide avec l'air à haute pression extrait depuis ledit compresseur dans un rapport de mélange approprié pour refroidir lesdites aubes de stator et changer une teneur en humidité de l'air humide à différents niveaux, ledit moyen étant disposé dans au moins deux desdits canaux d'agent de refroidissement.

2. Installation de turbine à gaz selon la revendication 1, comprenant en outre :
un canal pour alimenter l'air comprimé extrait depuis ledit compresseur vers ledit moyen pour changer une teneur en humidité de l'air humide à différents niveaux ; et
un trou de purge de compresseur formé dans une position à mi-chemin d'un trajet des gaz dudit compresseur pour extraire l'air comprimé hors dudit compresseur à travers celui-ci.

3. Installation de turbine à gaz selon la revendication 1, comprenant en outre :
un canal pour alimenter l'air comprimé extrait depuis ledit compresseur vers ledit moyen pour changer une teneur en humidité de l'air humide à différents niveaux ; et
un trou de purge de compresseur formé dans au moins deux positions le long d'un trajet des gaz dudit compresseur, auxquelles la pression est différente, pour extraire l'air comprimé hors dudit compresseur à travers ceux-ci.

4. Installation de turbine à gaz selon la revendication 1, dans laquelle une entrée, côté compresseur, d'un canal pour agent de refroidissement menant à une entrée d'un canal de refroidissement dans une aube de rotor est formée dans au moins deux positions le long d'un trajet des gaz dudit compresseur, auxquelles les pressions sont différentes l'une de l'autre.

5. Installation de turbine à gaz selon la revendication 1, dans laquelle une entrée, côté compresseur, d'un canal pour agent de refroidissement menant à une entrée d'un canal de refroidissement dans une aube de rotor est formée dans une position à mi-chemin d'un trajet des gaz dudit compresseur.

6. Installation de turbine à gaz selon la revendication 1, ladite installation de turbine à gaz comprenant en outre : une pluralité d'aubes de rotor agencées dans ladite turbine et ayant des canaux de refroidissement formés à l'intérieur pour permettre le passage d'un agent de refroidissement ;
un point de ramification prévu dans lesdits canaux pour agent de refroidissement afin d'introduire l'air humide produit par ledit humidificateur vers des entrées des canaux de refroidissement dans ladite pluralité d'aubes de stator et d'aubes de rotor ; et
un moyen (16, 17, 18) pour changer une teneur en humidité de l'air humide à différents niveaux, ledit moyen étant disposé en aval du point de ramification prévu dans lesdits canaux pour agent de refroidissement.

7. Installation de turbine à gaz selon la revendication 6, dans laquelle ledit moyen pour changer une teneur en humidité de l'air humide à différents niveaux est disposé dans une relation un-pour-un par rapport auxdites aubes de stator dans chacun desdits canaux pour agent de refroidissement menés aux entrées des canaux de refroidissement dans lesdites aubes de stator.

8. Procédé pour le refroidissement d'une installation de turbine à gaz comprenant un compresseur pour produire de l'air comprimé,
un dispositif de combustion pour mélanger et faire brûler l'air comprimé et un carburant,
une turbine mise en rotation par les gaz de combustion déchargés depuis ledit dispositif de combustion,
un humidificateur pour produire de l'air humide,
une pluralité d'aubes de stator agencées dans ladite turbine et ayant des canaux de refroidissement formés à l'intérieur pour permettre le passage d'un agent de refroidissement, et
des canaux pour agent de refroidissement destinés à introduire l'air humide produit par ledit humidificateur à des entrées des canaux de refroidissement dans lesdites aubes de stator,
ledit procédé étant **caractérisé par** les étapes consistant à mélanger ledit air humide avec l'air à haute pression extrait depuis ledit compresseur dans un rapport de mélange approprié pour refroidir lesdites aubes de stator, et
changer une teneur en humidité de l'air humide dans au moins deux desdits canaux pour agent de refroidissement à différents niveaux, en refroidissant ainsi lesdites aubes de stator.

9. Procédé pour le refroidissement d'une installation de turbine à gaz selon la revendication 8, dans lequel ledit air comprimé extrait depuis une position à mi-chemin d'un trajet des gaz dudit compresseur et l'air humide produit par ledit humidificateur sont utilisés pour refroidir une aube de rotor.

10. Procédé pour le refroidissement d'une installation de turbine à gaz selon la revendication 8, dans lequel l'air comprimé extrait depuis une position à mi-chemin d'un trajet des gaz dudit compresseur et l'air humide après refroidissement ou passage dans ladite aube de stator sont utilisés pour refroidir une aube de rotor.

11. Procédé pour le refroidissement d'une installation de turbine à gaz selon la revendication 8, dans lequel les gaz de combustion sont pressés à travers ladite turbine depuis le côté de l'étage avant jusqu'au côté de l'étage arrière, et l'humidité relative de l'agent de refroidissement alimenté à ladite aube de stator sur le côté de l'étage arrière est plus faible que l'humidité relative de l'agent de refroidissement alimenté à ladite aube de stator sur le côté de l'étage avant.
